# EUROPEAN PATENT APPLICATION

(11) **EP 4 254 604 A1**
(43) Date of publication of application: **04.10.2023**
(21) Application number: 22165082.3
(22) Date of filing: 29.03.2022
(51) Int. Cl.: H01M 10/613, H01M 10/6554, H01M 10/6556

(54) **COOLING PLATE ARRANGEMENT, BATTERY SYSTEM, ELECTRIC VEHICLE AND METHOD FOR ASSEMBLING**

(71) Applicant: Samsung SDI Co., Ltd., Yongin-si, Gyeonggi-do 17084 (KR)
(72) Inventor: Pröll, Andreas, 4184 Helfenberg (AT)
(74) Representative: Gulde & Partner

(57) **Abstract**

The present disclosure refers to a cooling plate arrangement (10) for cooling a plurality of battery cells (120) of a battery system (100), the cooling plate arrangement (10) comprises a first cover sheet (11), a second cover sheet (12), and a corrugated intermediate sheet (13) arranged between the first cover sheet (11) and the second cover sheet (12), wherein the intermediate sheet (13) and the first cover sheet (11) form at least one first cooling channel (14, 14.1, 14.2, 14.3, 14.4, 14.5, 14.6) confined between the intermediate sheet (13) and the first cover sheet (11), the intermediate sheet (13) and the second cover sheet (12) form at least one second cooling channel (15) confined between the intermediate sheet (13) and the second cover sheet (12), and wherein the first cooling channel (14, 14.1, 14.2, 14.3, 14.4, 14.5, 14.6) and the second cooling channel (15) are fluidly connected to each other so that first cooling channel (14, 14.1, 14.2, 14.3, 14.4, 14.5, 14.6) and second cooling channel (15) comprise an opposite flow direction (F1, F2).

## Description

### Field of the Disclosure

The present disclosure relates to a cooling plate arrangement. The present disclosure also relates to a battery system, to an electric vehicle and to a method for assembling.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

WO2019/008000 A1 discloses a thermal regulation device, particularly for cooling, of at least one electrical power storage element. The thermal regulation device comprises a base plate on which two juxtaposed stamped plates are rigidly connected. The base plate or the stamped plates being intended to come into thermal contact with the energy storage element. Each of the two stamped plates defining, with the base plate, a heat transfer fluid circulation duct comprising two spiral shaped channels that are interleaved together. The channels are fluidly connected to each other at the center of the double spiral, and the thermal regulation device comprises a single input and a single output for heat transfer fluid connected to each of the heat transfer fluid circulation ducts.

US 2014/0272513 A1 discloses a battery module having a cooling plate assembly made from two non-contiguous cooling plates. Each cooling plate has a side panel contiguous with a base panel, and the cooling plates are disposed opposite one another such that the base panels are coplanar. An inlet duct runs along an upper edge of each side panel, and a manifold having coolant channels in fluid communication with the inlet duct is located in each side panel. The base panels have an outlet duct in fluid communication with the manifold. Individual cells are disposed in the assembly such that the cell sides and bottoms are in heat-transfer contact with the plate side and base panels, respectively.

The cooling arrangement of the prior art are to be improved with respect to temperature distribution, an efficient temperature homogenization, e.g., the capability to smoothing out a hot-spot, an efficient manufacturability, and an improved arrangability of a coolant.

### Summary of Invention

The invention is defined by the appended claims. The description that follows is subjected to this limitation. Any disclosure lying outside the scope of said claims is only intended for illustrative as well as comparative purposes.

One aspect of the present disclosure refers to a cooling plate arrangement for cooling a plurality of battery cells of a battery system, the cooling plate arrangement comprises a first cover sheet, a second cover sheet, and a corrugated intermediate sheet arranged between the first cover sheet and the second cover sheet, wherein the intermediate sheet and the first cover sheet form at least one first cooling channel confined between the intermediate sheet and the first cover sheet, the intermediate sheet and the second cover sheet form at least one second cooling channel confined between the intermediate sheet and the second cover sheet, and wherein the first cooling channel and the second cooling channel are fluidly connected to each other so that first cooling channel and second cooling channel comprise an opposite flow direction.

Another aspect of the present disclosure refers to a battery system, comprising a cooling plate arrangement according to the present disclosure and a plurality of battery cells thermally connected to the cooling plate arrangement.

Yet another aspect of the present disclosure refers to an electric vehicle comprising the battery system according to the present disclosure.

Yet another aspect of the present disclosure refers to a method for assembling a battery system according to the present disclosure, wherein the method comprises the steps of: a) providing a cooling plate arrangement according to the present disclosure; b) providing a plurality of battery cells; and c) arranging the plurality of battery cells and the cooling plate in a thermally conducting manner.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment of the invention.
- Fig. 2: illustrates a perspective view of an intermediate sheet of a cooling pate arrangement according to an embodiment of the invention.
- Fig. 3: illustrates a sectional side view of a cooling pate arrangement according to an embodiment of the invention.
- Fig. 4: illustrates a perspective view of an intermediate sheet of a cooling pate arrangement according to another embodiment of the invention.
- Fig. 5: illustrates a first perspective view of a first cover sheet of a cooling pate arrangement according to an embodiment of the invention.
- Fig. 6: illustrates a second perspective view of a first cover sheet of a cooling pate arrangement according to an embodiment of the invention.
- Fig. 7: illustrates a perspective view of an intermediate sheet of a cooling pate arrangement according to another embodiment of the invention.

### Detailed Description of the Invention

### General Concept

One aspect of the present disclosure refers to a cooling plate arrangement for cooling a plurality of battery cells of a battery system, the cooling plate arrangement comprises a first cover sheet, a second cover sheet, and a corrugated intermediate sheet arranged between the first cover sheet and the second cover sheet. The first cover sheet and/or the second cover sheet are thermally contactable with the plurality of battery cells. Thus, the shape of the first cover sheet and/or the shape of the second cover sheet is adapted to contact the plurality of battery cells in a thermally conducting manner.

The intermediate sheet is corrugated, i.e., the intermediate sheet is not planar, i.e., fixed, and comprises, e.g., undulations and/or corrugations. The intermediate sheet comprises an shape defined by two principal extension directions and corrugations that are elongated in a corrugation direction perpendicular to the two principal extension directions.

Therein, the intermediate sheet and the first cover sheet form at least one first cooling channel confined between the intermediate sheet and the first cover sheet, the intermediate sheet and the second cover sheet form at least one second cooling channel confined between the intermediate sheet and the second cover sheet. Due to the corrugated shape of the intermediate sheet, the at least one first cooling channel is formed between the intermediate sheet and the first cover sheet and the at least one second cooling channel is formed between the intermediate sheet and the second cover sheet. I.e., the at least one first cooling channel and the at least one second cooling channel are separated from each other by the intermediate sheet. The at least one first cooling channel and the at least one second cooling channel are defined by the volume between the intermediate sheet and the first cover sheet and the second cover sheet, respectively. The first cover sheet, the intermediate sheet and the second cover sheet are arranged so that the first cooling channel and second cooling channel are formed.

Therein, the first cooling channel and the second cooling channel are fluidly connected to each other so that first cooling channel and second cooling channel comprise an opposite flow direction. I.e., the flow direction of a coolant in the first cooling channel and/or in a section thereof is opposite to the flow direction of a coolant in the second cooling channel and/or a section thereof being adjacent to and separated from the first cooling channel and/or the section thereof by the intermediate sheet. It is possible that the first cooling channel and the second cooling channel comprise a section at which the flow directions are unidirectional, i.e., a first flow direction of the first cooling channel and a second flow direction of the second cooling channel point in the same direction. The opposite flow directions imply that the cooling plate arrangement provides an improved temperature homogenization and heat distribution capability as steady homogenization can occur between in- and outflow fluid channels, i.e., the first fluid channel and the second fluid channel, through the intermediate sheet.

In other words, the corrugated intermediate sheet is arranged between the cover sheets, and the intermediate sheet is shaped and adapted to form at least two cooling channels. The flow direction of the at least two cooling channels is in opposite flow direction. Due to the corrugations of the intermediate sheet, cooling channels with a comparatively cold and a comparatively warm coolant are arranged alternatingly which leads to an improved temperature homogenization of the cooling plate arrangement. In contrast, in the prior art, an inlet to input a cool coolant is arranged at one end of a cooling arrangement and an outlet to output a warm coolant is arranged at an opposite end of a cooling arrangement.

The suggested cooling plate arrangement provides homogeneous and effective heat distribution to the battery cells placed thereon while maintaining low space consumption and easy manufacturing due to the stacked structure of the sheets. Furthermore, since the volume between the first cover sheet and the intermediate sheet and between intermediate sheet and the second cover sheet comprises fluid domains, there is no need for further heat conduction in a base material of one of the cover plates. A coolant can be provided in any of the cooling channels, i.e., any of the surfaces of the cooling channels comprised by the intermediate sheet, the first cover sheet and the second cover sheet are in contact with the coolant.

The invention achieves an improved and more uniform temperature distribution over the cover plates and a fast and efficient temperature homogenization over the cover plates to smooth out hot-spots, and regions where heat has to flow over significant conductive paths can be dispensed.

Furthermore, due to the improved heat homogenization properties, the invention reduces the risk of a thermal runaway as heat being generated by one of the battery cells is fast and efficiently procrastination to a sufficient amount of other battery cells being in thermal contact with the cooling plate arrangement. I.e., the thermal mass of the other battery cells is used up to their critical temperature.

According to one embodiment, the first cooling channel and the second cooling channel are arranged in a nested manner. I.e., the first cooling channel and the second cooling channel have a similar shape and arrangement and are made to be arranged inside each other, wherein the similar shape means that the first cooling channel and the second cooling channel are separated from each other by the intermediate sheet, however, comprise a symmetry, a similar length and/or a similar radius etc. The nested arrangement leads to short conductive paths and improves the homogeneity of the temperature distribution.

According to another embodiment, the first cooling channel and the second cooling channel are arranged spirally. The spiral arrangement leads to a further improvement of the heat homogenization. Optionally, the first cooling channel and the second cooling channel are arranged spirally and in a nested manner, wherein the first cooling channel and the second cooling channel are arranged alternatingly, i.e., as a double spiral.

According to another embodiment, the first cooling channel and the second cooling channel comprise a common center section to further improve the arrangement of the cooling channels and the homogeneity of the temperature distribution.

According to another embodiment, the intermediate sheet comprises a through-hole, and the first cooling channel and the second cooling channel are fluidly connected to each other via the through-hole to provide short conductive paths being formed by the first cooling channel and the second cooling channel. Optionally, the through-hole is arranged in a center section of the intermediate sheet. Optionally, the intermediate sheet comprises a plurality of through-holes. Alternatively, the first cooling channel and second cooling channel are fluidly connected to each other by external manifolds, e.g., the first cooling channel and second cooling channel are fluidly connected to each other in the vicinity of a fluid inlet or a fluid outlet. E.g., the intermediate sheet is optionally a corrugated sheet metal with straight cooling channels, wherein a first set of cooling channels at one side of the intermediate sheet is fluidly connected with an inlet manifold, a second set of cooling channels at the other side of the intermediate sheet is fluidly connected with an outlet manifold, wherein the inlet manifold and the outlet manifold are arranged at a same end of the intermediate sheet, and wherein the first set of cooling channels and the second set of cooling channels is fluidly connected to each other at an opposite end of the intermediate sheet.

According to another embodiment, the cooling plate arrangement comprises a plurality of first cooling channels and a plurality of second cooling channels. This enables that the first cooling channels and the second cooling channels can be arranged specific to the application to further improve heat homogenization.

According to another embodiment, one of the first cooling channels and one of the second cooling channels form a cooling channel arrangement, and a plurality of cooling channel arrangements is arranged side by side. I.e., each pair one of the first cooling channels and one of the second cooling channels is arranged as a sub geometry in a higher-level cooling plate arrangement with multiple homogeneous cooling sections. This improves an application specific heat distribution.

According to another embodiment, the plurality of first cooling channels is fluidly connected to a common fluid inlet, and/or the plurality of second cooling channels is fluidly connected to a common fluid outlet. This enables an efficient supply, discharge and/or exchange of a coolant flowing through the plurality of first cooling channels and/or the plurality of second cooling channels. Optionally, the common fluid inlet and the common fluid outlet are both arranged at the first cover sheet or at the second cover sheet. This improves the efficiency of the arrangement of the fluid inlet and the fluid outlet.

According to another embodiment, an angle being enclosed between an inclined section of the intermediate sheet and a planar section of the intermediate sheet is in the range of 30° to 60°, optionally 45°. This enables an efficient manufacture of the intermediate sheet. The angle of 45° implies an improved heat transfer via the intermediate sheet from the first cooling channel to the second cooling channel or vice versa.

According to another embodiment, any two of the plurality of first cooling channels are in a parallel flow arrangement, and/or any two of the plurality of second cooling channels are in a parallel flow arrangement. This further improves heat homogenization as a coolant in each of the first cooling channels and second cooling channels can be supplied, discharged and/or exchanged efficiently and as the length of a fluid path of the first cooling channels and second cooling channels is shorter than in a serial arrangement of the cooling channels.

According to another embodiment, the first cover sheet and the intermediate sheet and/or the second cover sheet and the intermediate sheet are connected to each other by soldering, welding, gluing and/or in a form locking manner. This enables an efficient connection between the first cover sheet and the intermediate sheet and between the intermediate sheet and the second cover sheet. Optionally the connection is adapted to seal the flow channels formed between the first cover sheet and the intermediate sheet and between the intermediate sheet and the second cover sheet. Alternatively, the cooling plate arrangement comprises one or more sealing members arranged between the first cover sheet and the intermediate sheet and between the intermediate sheet and the second cover sheet to seal the flow channels formed between the first cover sheet and the intermediate sheet and between the intermediate sheet and the second cover sheet. If the cover plates are connected to each other and resemble a frame for fixating the intermediate sheet in a form locking manner, bonding, e.g., by soldering, welding and/or gluing, of the cover plates to the intermediate sheet can be omitted.

According to another embodiment, the first cover sheet and/or the second cover sheet is planar, i.e., flat. This enables an efficient mountability and arrangement of the cooling plate arrangement, and improves a thermally conducting contact between the cover sheets and the plurality of battery cells. The first and the second cover sheet comprise a smooth surface, each. Furthermore, since both top and bottom surfaces are smooth, the cooling plate can be also used in between two devices to be cooled.

Another aspect of the present disclosure refers to a battery system, comprising a cooling plate arrangement according to the present disclosure and a plurality of battery cells thermally connected to the cooling plate arrangement. The cooling plate arrangement optionally comprises the above-described optional features to achieve the technical effects associated therewith.

Yet another aspect of the present disclosure refers to an electric vehicle comprising the battery system according to the present disclosure. A cooling plate arrangement of the battery system optionally comprises the above-described optional features to achieve the technical effects associated therewith.

Yet another aspect of the present disclosure refers to a method for assembling a battery system according to the present disclosure, wherein the method comprises the steps of: a) providing a cooling plate arrangement according to the present disclosure; b) providing a plurality of battery cells; and c) arranging the plurality of battery cells and the cooling plate in a thermally conducting manner. The cooling plate arrangement optionally comprises the above-described optional features to achieve the technical effects associated therewith.

### Specific Embodiments

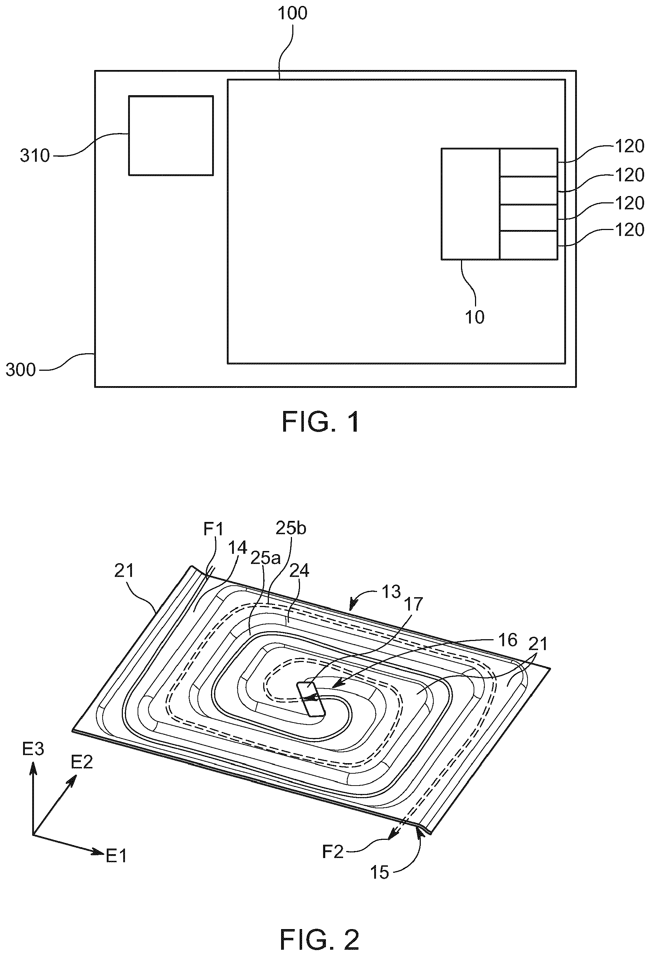

Figure 1 illustrates a schematic view of an electric vehicle 300 according to an embodiment of the invention.

The electric vehicle 300 is propelled by an electric motor 310, using energy stored in rechargeable batteries arranged in a battery system 100. The battery system 100, comprises a cooling plate arrangement 10 as described with reference to Figures 2 to 6 and a plurality of battery cells 120 thermally connected to the cooling plate arrangement 10.

Figure 2 illustrates a perspective view of an intermediate sheet 13 of a cooling pate arrangement 10 according to an embodiment of the invention.

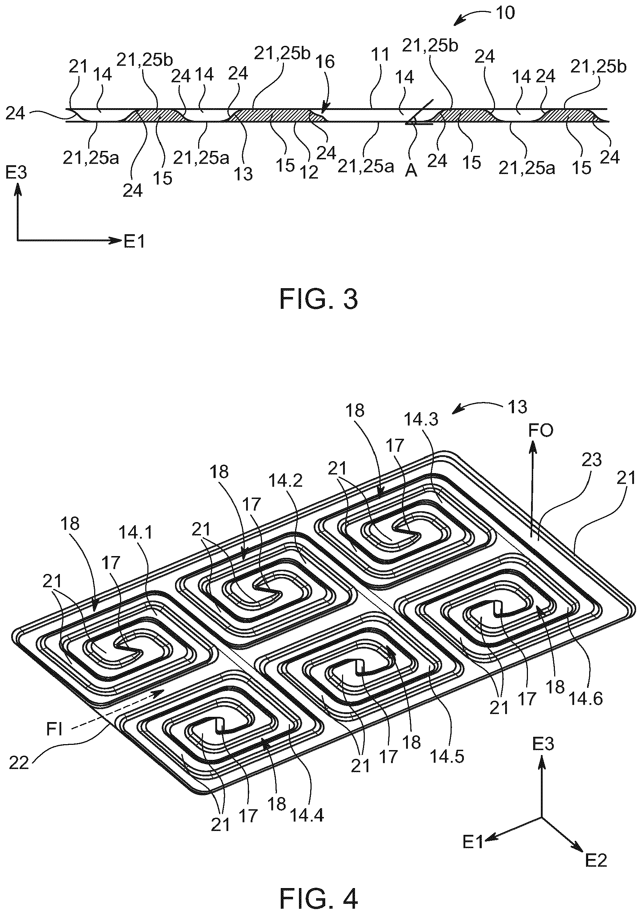

The intermediate sheet 13 is a corrugated intermediate sheet 13 and adapted to be arranged between a first cover sheet 11 and a second cover sheet 12 as explained with reference to Figure 3.

As shown in Figure 2, the corrugated intermediate sheet 13 comprises an essentially rectangular shape defined by two principal extension directions E1, E2, i.e., a first principle extension direction E1 and a second principle extension direction E2, and corrugations that are elongated in a corrugation direction E3 perpendicular to the two principal extension directions E1, E2.

The intermediate sheet 13 comprises two planar sections 25a, 25b and an inclined section 24. The inclined section 24 is arranged between the planar sections 25a, 25b. The inclined section 24 connects the planar sections 25a, 25b with each other. Each of the planar sections 25a, 25b is arranged parallel to a plane defined by the two principal extension directions E1, E2. In this perspective view, one of the planar sections 25a, 25b is depressed and one of the planar sections 25a, 25b is elevated. I.e., in the corrugation direction E3, the depressed planar section 25a is separated from the elevated planar section 25b. The planar sections 25a, 25b form connection sections 21 to attach the first cover sheet 11 and the intermediate sheet 13 which each other and to attach the second cover sheet 12 and the intermediate sheet 13 which each other as further described with reference to Figure 3.

The intermediate sheet 13 and the first cover sheet 11 (not shown in Figure 2) form a first cooling channel 14 confined between the intermediate sheet 13 and the first cover sheet 11. The first cooling channel 14 is formed by, in this perspective view, the depressed planar section 25a of the corrugated intermediate sheet 13.

The intermediate sheet 13 and the second cover sheet 12 (not shown in Figure 2) form a second cooling channel 15 confined between the intermediate sheet 13 and the second cover sheet 12. The second cooling channel 15 is formed by, in this perspective view, the elevated planar section 25b of the corrugated intermediate sheet 13.

The first cooling channel 14 comprises a first flow direction F1 as indicated by the curved solid double-lined arrow which indicates the main contour of the first cooling channel 14 and its principal flow direction F1. The second cooling channel 15 comprises a second flow direction F2 as indicated by the curved dashed double-lined arrow which indicates the main contour of the second cooling channel 15 and its principal flow direction F2. Thus, the first cooling channel 14 and the second cooling channel 15 are separated from each other by the intermediate sheet 13. In this perspective view, the first cooling channel 14 is arranged above the intermediate sheet 13 and the second cooling channel 15 is arranged below the intermediate sheet 13.

The first cooling channel 14 and the second cooling channel 15 are arranged spirally. I.e., the first cooling channel 14 and the second cooling channel 15 are arranged essentially in a plane and are centered at a center section 16. Specifically, the main contour of the first cooling channel 14 and the second cooling channel 15 is arranged in a plane being defined by the two principal extension directions E1, E2 of the intermediate sheet 13. Thus, the first cooling channel 14 and the second cooling channel 15 are arranged in the same plane. The first cooling channel 14 and the second cooling channel 15 are arranged as a double-spiral, wherein each of the first cooling channel 14 and the second cooling channel 15 form a spiral of the double spiral.

The center section 16 is a common center section 16 of the first cooling channel 14 and the second cooling channel 15. The common center section 16 is the center of the double-spiral of the first cooling channel 14 and the second cooling channel 15. At the common center section 16, the intermediate sheet 13 comprises a through-hole 17. The first cooling channel 14 and the second cooling channel 15 are fluidly connected to each other via the through-hole 17. Thus, at the center section 16 and at the through-hole 17, the flow directions F1, F2 of the first cooling channel 14 and the second cooling channel 15 coincide, i.e., are unidirectional. The first cooling channel 14 and the second cooling channel 15 merge into each other at the through-hole 17.

The first cooling channel 14 and the second cooling channel 15 are arranged in a nested manner. I.e., each of the first cooling channel 14 and the second cooling channel 15 comprises sections that are arranged in an interleaving manner.

Due to the spiral and nested shape of the intermediate sheet 13, the corrugation is achieved by arranging the inclined section 24 in a spiraling manner between to two planar sections 25a, 25b.

The first cooling channel 14 and the second cooling channel 15 are fluidly connected to each other so that first cooling channel 14 and second cooling channel 15 comprise an opposite flow direction F1, F2. I.e., except at the center section 16 at which the first cooling channel 14 merges with the second cooling channel 15, the first flow direction F1 of the first cooling channel 14 is opposite to the second flow direction F2 of the second cooling channel 15. I.e., from a radial perspective, i.e., in a direction in the plane defined by the two principal extension direction E1, E2, the first cooling channel 14 and the second cooling channel 15 are arranged so that any adjacently arranged sections of the first cooling channel 14 and the second cooling channel 15 comprise an opposite flow direction F1, F2.

In other words, the cooling plate arrangement 10 thus comprises the flow guide plate, i.e., the intermediate sheet 13, with at least one punch hole, i.e., the through-hole 17, which fluidly connects an upper cooling channel, i.e., the first cooling channel 14 (double arrow with solid line) and a lower cooling channel, i.e., the second cooling channel 15 (double arrow with dashed line).

Multiple of these geometric elements as illustrated by the corrugated intermediate sheet 13 can resemble a larger cooling plate with multiple homogeneous sections, i.e., cooling channel arrangements 18, as illustrated in Figure 4.

Figure 3 illustrates a sectional side view of a cooling pate arrangement 10 according to an embodiment of the invention.

The cooling plate arrangement 10 comprises a first cover sheet 11, a second cover sheet 12, and the intermediate sheet 13 as described with reference to Figure 2. The corrugated intermediate sheet 13 is arranged between the first cover sheet 11 and the second cover sheet 12. I.e., the intermediate sheet 13 is sandwiched between the first cover sheet 11 and the second cover sheet 12.

The intermediate sheet 13 comprises two planar sections 25a, 25b which are, in the corrugation direction E3, separated from each other and interconnected by the inclined section 24. The planar sections 25a, 25b are parallel to the plane being defined by the two principal extension directions E1, E2. An angle A being enclosed between the inclined section 24 and each of the planar sections 25a, 25b is 45°.

The intermediate sheet 13 and the first cover sheet 11 form the first cooling channel 14 confined between the intermediate sheet 13 and the first cover sheet 11, and the intermediate sheet 13 and the second cover sheet 12 form the second cooling channel 15 confined between the intermediate sheet 13 and the second cover sheet 12 as described with reference to Figure 2.

The first cover sheet 11 and the second cover sheet 12 are planar. The intermediate sheet 13 is covered by the planer cover sheets 11, 12.

The first cover sheet 11 and the intermediate sheet 13, and the second cover sheet 12 and the corrugated intermediate sheet 13 are connected to each other by soldering, welding, gluing and/or in a form locking manner. Specifically, the intermediate sheet 13 is attached to the first cover sheet 11 at the connection sections 21 which are formed by the elevated planar sections 25b, and the intermediate sheet 13 is attached to the second cover sheet 12 at the connection sections 21, which are formed by the depressed sections 25a.

A coolant (not indicated) is provided between in any of the cooling channels 14, 15, i.e., any of the surfaces of the cooling channels 14, 15 comprised by the intermediate sheet 13, the first cover sheet 11 and the second cover sheet 12 is in contact with the coolant.

Figure 4 illustrates a perspective view of an intermediate sheet 13 of a cooling pate arrangement 10 according to another embodiment of the invention.

The cooling plate arrangement 10 comprises a plurality of first cooling channels 14.1, 14.2, 14.3, 14.4, 14.5, 14.6 and a plurality of second cooling channels 15 (not indicated in Figure 4). One of the first cooling channels 14.1, 14.2, 14.3, 14.4, 14.5, 14.6 and one of the second cooling channels 15 form a cooling channel arrangement 18. Each of the cooling channel arrangement 18, i.e., each pair of one of the first cooling channels 14.1, 14.2, 14.3, 14.4, 14.5, 14.6 and one of the second cooling channels 15 and each section of the intermediate sheet 13 that forms one of the cooling channel arrangements 18, comprises the feature of the embodiments as shown in Figures 2 and 3 and described with reference thereto.

A plurality of cooling channel arrangements 18 is arranged side by side. Specifically, the plurality of cooling channel arrangements 18 is arranged in a two-dimensional arrangement in the plane being defined by the two principal extension directions E1, E2. In the shown embodiment two times three cooling channel arrangements 18 are formed by the intermediate sheet 13 and the cooling plate arrangement 10.

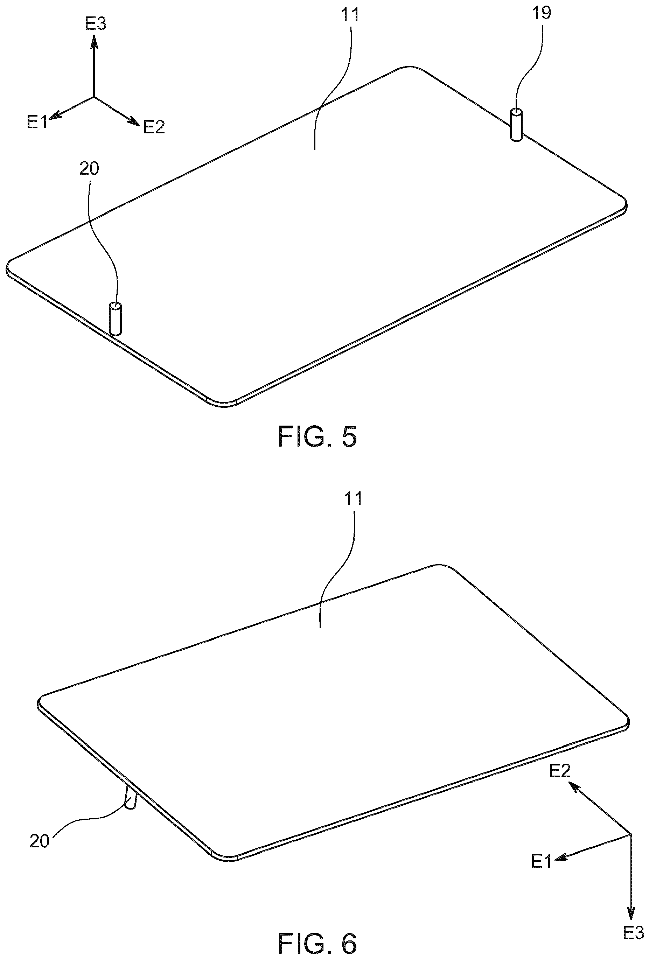

The plurality of first cooling channels 14.1, 14.2, 14.3, 14.4, 14.5, 14.6 is fluidly connected to a common fluid inlet 19 (not shown in Figure 4, see Figure 5) via an input manifold 22, wherein the input flow direction FI is indicated by an arrow with a dashed line. In this perspective view, the input manifold 22 is arranged so that the input flow direction FI is arranged below the intermediate sheet 13. The plurality of second cooling channels 15 is fluidly connected to a common fluid outlet 20 (not shown in Figure 4, see Figure 5) via an output manifold 23, wherein the output flow direction FO is indicated by an arrow with a solid line. The input manifold 22 and the output manifold 23 are arranged at opposite ends of the intermediate sheet 13 with respect to the extension of the intermediate sheet 13 in the first principal extension direction E1.

Any two of the plurality of first cooling channels 14.1, 14.2, 14.3, 14.4, 14.5, 14.6 are in a parallel flow arrangement, and any two of the plurality of second cooling channels 15 are in a parallel flow arrangement. I.e., the coolant that is input via the input manifold 22 is directed to each of the first cooling channels 14.1, 14.2, 14.3, 14.4, 14.5, 14.6 and each of the second cooling channels 15 without being routed via all of the first cooling channels 14.1, 14.2, 14.3, 14.4, 14.5, 14.6 and each of the second cooling channels 15, respectively.

Figure 5 illustrates a first perspective view of a first cover sheet 11 of a cooling pate arrangement 10 according to an embodiment of the invention.

The first cover sheet 11 is a planar, i.e., flat, sheet.

The common fluid inlet 19 and the common fluid outlet 20 are both arranged at the first cover sheet 11. In a non-shown embodiment, the common fluid inlet 19 and the common fluid outlet 20 are both arranged at the second cover sheet 12. The fluid inlet 19 and fluid outlet 20 are also called fluid ports.

The input manifold 22 and the common fluid inlet 19 are arranged to be in fluid communication with each other. The output manifold 23 and the common fluid outlet 20 are arranged to be in fluid communication with each other.

Figure 6 illustrates a second perspective view of a first cover sheet 11 of a cooling pate arrangement 10 according to an embodiment of the invention. Figure 6 shows the first cover sheet 11 as described with reference to Figure 5.

The common fluid inlet 19 and the common fluid outlet 20 are arranged at opposite ends of the first cover sheet 11 with respect to the extension of the first cover sheet 11 in the first principal extension direction E1.

The first cover sheet 11 as flat to be attached to the connection sections 21 of the intermediate sheet 13 as described with reference to Figure 3.

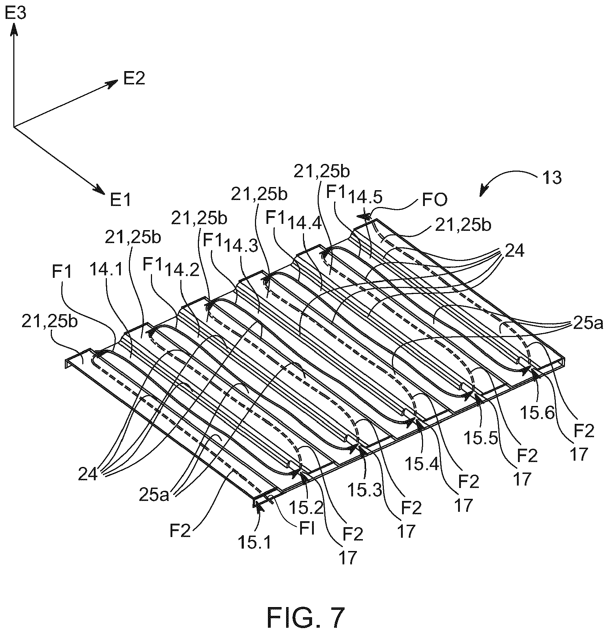

Figure 7 illustrates a perspective view of an intermediate sheet 13 of a cooling pate arrangement 10 according to another embodiment of the invention. The intermediate sheet 13 of Figure 7 is described with reference to Figure 2, wherein differences are described.

The intermediate sheet 13 comprises a plurality of first cooling channels 14.1, 14.2, 14.3, 14.4, 14.5 and a plurality of second cooling channels 15.1, 15.2, 15.3, 15.4, 15.5, 15.6.

Each of the first cooling channels 14.1, 14.2, 14.3, 14.4, 14.5 comprises a first flow direction F1 as indicated by the solid double-lined arrow which indicates the main contour of the first cooling channels 14.1, 14.2, 14.3, 14.4, 14.5 and its principal flow direction F1. Each of the second cooling channels 15.1, 15.2, 15.3, 15.4, 15.5, 15.6 comprises a second flow direction F2 as indicated by the dashed double-lined arrow which indicates the main contour of the second cooling channels 15.1, 15.2, 15.3, 15.4, 15.5, 15.6 and its principal flow direction F2. Each of the first cooling channels 14.1, 14.2, 14.3, 14.4, 14.5 is separated from the second cooling channels 15.1, 15.2, 15.3, 15.4, 15.5, 15.6 by the intermediate sheet 13; and each the second cooling channels 15.1, 15.2, 15.3, 15.4, 15.5, 15.6 is separated from the first cooling channels 14.1, 14.2, 14.3, 14.4, 14.5 by the intermediate sheet 13. In this perspective view, each of the first cooling channels 14.1, 14.2, 14.3, 14.4, 14.5 is arranged above the intermediate sheet 13 and each of the second cooling channel 15 is arranged below the intermediate sheet 13.

Each of the first cooling channels 14.1, 14.2, 14.3, 14.4, 14.5 and each of the second cooling channels 15.1, 15.2, 15.3, 15.4, 15.5, 15.6 comprises an elongated and straight shape, each extending in the first extension direction E1. In the second extension direction E2, the first cooling channels 14.1, 14.2, 14.3, 14.4, 14.5 and the second cooling channels 15.1, 15.2, 15.3, 15.4, 15.5, 15.6 are arranged alternatingly. The plurality of the first cooling channels 14.1, 14.2, 14.3, 14.4, 14.5 and the plurality of the second cooling channels 15.1, 15.2, 15.3, 15.4, 15.5, 15.6 are arranged in an alternating manner perpendicular to the elongated and straight shape. Each of the first cooling channels 14.1, 14.2, 14.3, 14.4, 14.5 is adjacently arranged to at least one of the second cooling channels 15.1, 15.2, 15.3, 15.4, 15.5, 15.6, and each of the second cooling channels 15.1, 15.2, 15.3, 15.4, 15.5, 15.6 is adjacently arranged to at least one of the first cooling channels 14.1, 14.2, 14.3, 14.4, 14.5.

The intermediate sheet 13 comprises a plurality of through-holes 17, e.g., punch holes or cutouts. At each of the plurality of through-holes 17, one of the first cooling channels 14.1, 14.2, 14.3, 14.4, 14.5 and one of the second cooling channels 15.1, 15.2, 15.3, 15.4, 15.5, 15.6 are fluidly connected with each other. Thus, at each of the through-holes 17, the flow directions F1, F2 of the respective first cooling channel 14.1, 14.2, 14.3, 14.4, 14.5 and the respective second cooling channel 15.1, 15.2, 15.3, 15.4, 15.5, 15.6 coincide, i.e., are unidirectional. One of the first cooling channels 14.1, 14.2, 14.3, 14.4, 14.5 and one of the second cooling channels 15.1, 15.2, 15.3, 15.4, 15.5, 15.6 merge into each other at each of the through-holes 17.

Each of the first cooling channels 14.1, 14.2, 14.3, 14.4, 14.5 and the adjacently arranged second cooling channel 15.1, 15.2, 15.3, 15.4, 15.5, 15.6 are fluidly connected to each other so that the first cooling channel 14.1, 14.2, 14.3, 14.4, 14.5 and the respective second cooling channel 15.1, 15.2, 15.3, 15.4, 15.5, 15.6 comprise an opposite flow direction F1, F2. I.e., except at the through-holes 17 at which one of the first cooling channel 14.1, 14.2, 14.3, 14.4, 14.5 merges with the respective second cooling channel 15.1, 15.2, 15.3, 15.4, 15.5, 15.6, the first flow direction F1 of the first cooling channel 14.1, 14.2, 14.3, 14.4, 14.5 is opposite to the second flow direction F2 of the respective second cooling channel 15.1, 15.2, 15.3, 15.4, 15.5, 15.6. I.e., in this representation, the first flow direction F1 of each of the first cooling channels 14.1, 14.2, 14.3, 14.4, 14.5 is opposite to the first extension direction E1 as indicated and the second flow direction F2 of each of the second cooling channels 15.1, 15.2, 15.3, 15.4, 15.5, 15.6 is along the first extension direction E1 as indicated and thus opposite to the first flow direction F1

Another number of alternatingly arranged first cooling channels 14.1, 14.2, 14.3, 14.4, 14.5 and second cooling channels 15.1, 15.2, 15.3, 15.4, 15.5, 15.6 can resemble a differently-sized intermediate sheet 13 for a cooling plate arrangement 10 (not shown).

### Reference signs

- 10: cooling plate arrangement
- 11: first cover sheet
- 12: second cover sheet
- 13: intermediate sheet
- 14: first cooling channel
- 14.1, 14.2, 14.3, 14.4, 14.5, 14.6: first cooling channel
- 15: second cooling channel
- 15.1, 15.2, 15.3, 15.4, 15.5, 15.6: second cooling channel
- 16: center section
- 17: through-hole
- 18.1, 18.2, 18.3, 18.4, 18.5, 18.6: cooling channel arrangement
- 19: fluid inlet
- 20: fluid outlet
- 21: connection section
- 22: input manifold
- 23: output manifold
- 24: inclined section
- 25a, 25b: planar section

- 100: battery system
- 120: battery cell

- 300: electric vehicle
- 310: electric motor

- A: inclination angle
- E1, E2: principal extension direction
- E3: corrugation direction
- F1, F2: flow direction
- FI: inlet flow direction
- FO: outlet flow direction

## Claims

1. A cooling plate arrangement (10) for cooling a plurality of battery cells (120) of a battery system (100), the cooling plate arrangement (10) comprises
- a first cover sheet (11),
- a second cover sheet (12), and a
- corrugated intermediate sheet (13) arranged between the first cover sheet (11) and the second cover sheet (12), wherein
- the intermediate sheet (13) and the first cover sheet (11) form at least one first cooling channel (14, 14.1, 14.2, 14.3, 14.4, 14.5, 14.6) confined between the intermediate sheet (13) and the first cover sheet (11),
- the intermediate sheet (13) and the second cover sheet (12) form at least one second cooling channel (15) confined between the intermediate sheet (13) and the second cover sheet (12), and wherein
- the first cooling channel (14, 14.1, 14.2, 14.3, 14.4, 14.5, 14.6) and the second cooling channel (15) are fluidly connected to each other so that first cooling channel (14, 14.1, 14.2, 14.3, 14.4, 14.5, 14.6) and second cooling channel (15) comprise an opposite flow direction (F1, F2).

2. The cooling plate arrangement as claimed in claim 1, wherein the first cooling channel (14, 14.1, 14.2, 14.3, 14.4, 14.5, 14.6) and the second cooling channel (15) are arranged in a nested manner.

3. The cooling plate arrangement as claimed in any one of the preceding claims, wherein the first cooling channel (14, 14.1, 14.2, 14.3, 14.4, 14.5, 14.6) and the second cooling channel (15) are arranged spirally.

4. The cooling plate arrangement as claimed in claim 3, wherein the first cooling channel (14, 14.1, 14.2, 14.3, 14.4, 14.5, 14.6) and the second cooling channel (15) comprise a common center section (16).

5. The cooling plate arrangement as claimed in any one of the preceding claims, wherein
- the intermediate sheet (13) comprises a through-hole (17), and wherein
- the first cooling channel (14, 14.1, 14.2, 14.3, 14.4, 14.5, 14.6) and the second cooling channel (15) are fluidly connected to each other via the through-hole (17).

6. The cooling plate arrangement as claimed in any one of the preceding claims, wherein
- the cooling plate arrangement (10) comprises a plurality of first cooling channels (14, 14.1, 14.2, 14.3, 14.4, 14.5, 14.6) and a plurality of second cooling channels (15).

7. The cooling plate arrangement as claimed in claim 6, wherein
- one of the first cooling channels (14, 14.1, 14.2, 14.3, 14.4, 14.5, 14.6) and one of the second cooling channels (15) form a cooling channel arrangement (18, 18.1, 18.2, 18.3, 18.4, 18.5, 18.6), and
- a plurality of cooling channel arrangements (18, 18.1, 18.2, 18.3, 18.4, 18.5, 18.6) is arranged side by side.

8. The cooling plate arrangement as claimed claim 6 or 7, wherein the plurality of first cooling channels (14, 14.1, 14.2, 14.3, 14.4, 14.5, 14.6) is fluidly connected to a common fluid inlet (19), and/or the plurality of second cooling channels (15) is fluidly connected to a common fluid outlet (20).

9. The cooling plate arrangement as claimed in any one of the preceding claims, wherein an angle (A) being enclosed between an inclined section (24) of the intermediate sheet (13) and a planar section (25a, 25b) of the intermediate sheet (13) is in the range of 30° to 60°, optionally 45°.

10. The cooling plate arrangement as claimed in any one of the preceding claims, wherein any two of the plurality of first cooling channels (14, 14.1, 14.2, 14.3, 14.4, 14.5, 14.6) are in a parallel flow arrangement, and/or any two of the plurality of second cooling channels (15) are in a parallel flow arrangement.

11. The cooling plate arrangement as claimed in any one of the preceding claims, wherein the first cover sheet (11) and the intermediate sheet (13), and/or the second cover sheet (12) and the intermediate sheet (13) are connected to each other by soldering, welding, gluing and/or in a form locking manner.

12. The cooling plate arrangement as claimed in any one of the preceding claims, wherein the first cover sheet (11) and/or the second cover sheet (12) is planar.

13. A battery system (100), comprising a cooling plate arrangement (10) according to any of the preceding claims and a plurality of battery cells (120) thermally connected to the cooling plate arrangement (10).

14. An electric vehicle (300) comprising the battery system (100) according to claim 13.

15. A method for assembling a battery system (100) as claimed in claim 13, wherein the method comprises the steps of:
a) providing a cooling plate arrangement (10) as claimed in any one of claim 1 to 12;
b) providing a plurality of battery cells (120); and
c) arranging the plurality of battery cells (120) and the cooling plate (10) in a thermally conducting manner.

## Amended claims

### Amended claims in accordance with Rule 137(2) EPC.

1. A cooling plate arrangement (10) for cooling a plurality of battery cells (120) of a battery system (100), the cooling plate arrangement (10) comprises
- a first cover sheet (11),
- a second cover sheet (12), and a
- corrugated intermediate sheet (13) arranged between the first cover sheet (11) and the second cover sheet (12), wherein
- the intermediate sheet (13) and the first cover sheet (11) form at least one first cooling channel (14, 14.1, 14.2, 14.3, 14.4, 14.5, 14.6) confined between the intermediate sheet (13) and the first cover sheet (11),
- the intermediate sheet (13) and the second cover sheet (12) form at least one second cooling channel (15) confined between the intermediate sheet (13) and the second cover sheet (12), and wherein
- the first cooling channel (14, 14.1, 14.2, 14.3, 14.4, 14.5, 14.6) and the second cooling channel (15) are fluidly connected to each other so that first cooling channel (14, 14.1, 14.2, 14.3, 14.4, 14.5, 14.6) and second cooling channel (15) comprise an opposite flow direction (F1, F2),
wherein the first cooling channel (14, 14.1, 14.2, 14.3, 14.4, 14.5, 14.6) and the second cooling channel (15) comprise a common center section (16).

2. The cooling plate arrangement as claimed in claim 1, wherein the first cooling channel (14, 14.1, 14.2, 14.3, 14.4, 14.5, 14.6) and the second cooling channel (15) are arranged in a nested manner.

3. The cooling plate arrangement as claimed in any one of the preceding claims,
wherein the first cooling channel (14, 14.1, 14.2, 14.3, 14.4, 14.5, 14.6) and the second cooling channel (15) are arranged spirally.

4. The cooling plate arrangement as claimed in any one of the preceding claims, wherein
- the intermediate sheet (13) comprises a through-hole (17), and wherein
- the first cooling channel (14, 14.1, 14.2, 14.3, 14.4, 14.5, 14.6) and the second cooling channel (15) are fluidly connected to each other via the through-hole (17).

5. The cooling plate arrangement as claimed in any one of the preceding claims, wherein
- the cooling plate arrangement (10) comprises a plurality of first cooling channels (14, 14.1, 14.2, 14.3, 14.4, 14.5, 14.6) and a plurality of second cooling channels (15).

6. The cooling plate arrangement as claimed in claim 5, wherein
- one of the first cooling channels (14, 14.1, 14.2, 14.3, 14.4, 14.5, 14.6) and one of the second cooling channels (15) form a cooling channel arrangement (18, 18.1, 18.2, 18.3, 18.4, 18.5, 18.6), and
- a plurality of cooling channel arrangements (18, 18.1, 18.2, 18.3, 18.4, 18.5, 18.6) is arranged side by side.

7. The cooling plate arrangement as claimed claim 5 or 6, wherein the plurality of first cooling channels (14, 14.1, 14.2, 14.3, 14.4, 14.5, 14.6) is fluidly connected to a common fluid inlet (19), and/or the plurality of second cooling channels (15) is fluidly connected to a common fluid outlet (20).

8. The cooling plate arrangement as claimed in any one of the preceding claims, wherein an angle (A) being enclosed between an inclined section (24) of the intermediate sheet (13) and a planar section (25a, 25b) of the intermediate sheet (13) is in the range of 30° to 60°, optionally 45°.

9. The cooling plate arrangement as claimed in any one of the preceding claims, wherein any two of the plurality of first cooling channels (14, 14.1, 14.2, 14.3, 14.4, 14.5, 14.6) are in a parallel flow arrangement, and/or any two of the plurality of second cooling channels (15) are in a parallel flow arrangement.

10. The cooling plate arrangement as claimed in any one of the preceding claims, wherein the first cover sheet (11) and the intermediate sheet (13), and/or the second cover sheet (12) and the intermediate sheet (13) are connected to each other by soldering, welding, gluing and/or in a form locking manner.

11. The cooling plate arrangement as claimed in any one of the preceding claims, wherein the first cover sheet (11) and/or the second cover sheet (12) is planar.

12. A battery system (100), comprising a cooling plate arrangement (10) according to any of the preceding claims and a plurality of battery cells (120) thermally connected to the cooling plate arrangement (10).

13. An electric vehicle (300) comprising the battery system (100) according to claim 12.

14. A method for assembling a battery system (100) as claimed in claim 12, wherein the method comprises the steps of:
a) providing a cooling plate arrangement (10) as claimed in any one of claim 1 to 11;
b) providing a plurality of battery cells (120); and
c) arranging the plurality of battery cells (120) and the cooling plate (10) in a thermally conducting manner.
